Europäisches Patentamt

European Patent Office

Office européen des brevets

(19)

(11) Numéro de publication : **0 065 451 B1**

(12) **FASCICULE DE BREVET EUROPÉEN**

(45) Date de publication du fascicule du brevet :
20.02.85

(51) Int. Cl.⁴ : **B 60 T 8/36, B 60 T 8/46**

(21) Numéro de dépôt : **82400814.8**

(22) Date de dépôt : **04.05.82**

(54) **Modulateur de freinage pour système de freinage anti-patinant.**

(30) Priorité : **08.05.81 FR 8109193**

(43) Date de publication de la demande :
**24.11.82 Bulletin 82/47**

(45) Mention de la délivrance du brevet :
**20.02.85 Bulletin 85/08**

(84) Etats contractants désignés :
**DE FR GB IT SE**

(56) Documents cités :
**DE-A- 2 352 284**
**DE-A- 2 444 765**
**DE-A- 2 503 792**
**DE-A- 2 557 347**
**DE-A- 2 643 862**
**DE-A- 2 647 072**
**US-A- 4 218 100**

(73) Titulaire : **SOCIETE ANONYME D.B.A.**
**Centre Paris Pleyel**
**F-93521 St-Denis Cedex 01 (FR)**

(72) Inventeur : **Bénéteau, Pierre**
**10, rue des Aulnes**
**F-93600 Aulnay S/S Bois (FR)**

(74) Mandataire : **Poidatz, Emmanuel et al**
**Service Brevets Bendix 44 rue François 1er**
**F-75008 Paris (FR)**

## Description

L'invention concerne un modulateur de freinage pour système de freinage anti-patinant à réalimentation et plus particulièrement un modulateur ne comportant qu'un seul solénoïde de commande, du type comprenant une vanne d'isolement agencée entre un conduit destiné à être relié à une source de pression de freinage et un conduit de sortie destiné à être relié à un moteur de frein, une vanne de décharge agencée entre le conduit de sortie et une bâche, un circuit de réalimentation incluant une restriction d'écoulement, et un solénoïde de commande muni d'un organe d'actionnement, les vannes d'isolement et de décharge ayant leurs clapets respectifs mobiles suivant un axe commun et leurs sièges respectifs en opposition, l'organe d'actionnement du solénoïde étant couplé au clapet mobile de la vanne de décharge, lequel est couplable mécaniquement au clapet mobile de la vanne d'isolement par un organe de liaison, coulissant dans un alésage, pour déplacer ce dernier vers son propre siège, à l'encontre d'un moyen de rappel élastique, lorsque le solénoïde de commande est actionné. Un tel ensemble de modulateur est décrit dans le document US-A-4.218.100.

On sait que l'une des difficultés à vaincre pour la mise au point d'un système de freinage anti-patinant à réalimentation est de pouvoir contrôler le taux de croissance de la pression dans les moteurs de frein, pendant les phases de réalimentation. Ce contrôle s'effectue souvent en disposant dans le circuit de réalimentation une restriction d'écoulement. Bien entendu, en freinage normal, cette restriction doit être shuntée pour éviter une impression gênante de retard au freinage. De nombreux systèmes antérieurs ont été conçus avec des moyens de commande séparés pour, d'une part, mettre en service ou shunter la restriction et, d'autre part, commander la succession des phases de détente et de réalimentation. Plus récemment, on a proposé un agencement dans lequel ces deux fonctions sont assurées à partir d'un seul solénoïde de commande, la restriction étant mise en service dès le déclenchement d'un cycle de freinage anti-patinant et jusqu'à la fin de celui-ci. Un tel système est décrit dans le Brevet Français N° 2.217.575. Dans ce système, la restriction d'écoulement est mise en service par la fermeture d'une vanne d'isolement insérée en série entre la source de pression de freinage et les moteurs de frein. Cette vanne d'isolement est fermée par le déplacement d'un piston mobile dans un alésage et soumis à une contre-pression engendrée à la première détente. Elle doit rester fermée pendant tout le cycle de freinage anti-patinant, ce qui nécessite l'adjonction d'un certain nombre de vannes anti-retour supplémentaires sans lesquelles ladite vanne d'isolement risquerait de s'ouvrir prématurément. Dans le document US-A-4.218.100 sus-mentionné, les clapets des vannes d'isolement et de décharge sont couplés par une tige suiveuse et le circuit de réalimentation nécessite un clapet additionnel commandé par un piston piloté par la différence de pression entre la source de pression de freinage et le circuit de freinage délesté à réalimenter, avec les inconvénients afférents de multiplication des organes de commande et des tubulures de connexion.

L'invention a pour objet de proposer un nouvel agencement de modulateur compact et à faible inertie, permettant une réduction du nombre de composants sans que le fonctionnement de la vanne d'isolement en soit affecté.

Pour ce faire, selon l'invention, le clapet mobile de la vanne d'isolement comporte une partie cylindrique formant l'organe de liaison et définissant intérieurement une portion de conduit du circuit de réalimentation débouchant latéralement dans l'alésage, cette portion de conduit débouchant dans l'extrémité axiale de la partie cylindrique coopérant avec le clapet mobile de la vanne de décharge et étant obturable par ce dernier, la section de la partie cylindrique étant inférieure à la section du siège du clapet mobile de la vanne d'isolement.

Avec un tel agencement, les clapets des vannes d'isolement et de décharge contrôlent en outre simultanément, selon leurs positions respectives pilotées par le solénoïde de commande, le circuit de réalimentation en permettant ainsi de s'affranchir de clapets de distribution spécifiques additionnels.

L'invention sera mieux comprise et d'autres avantages de celle-ci apparaîtront mieux à la lumière de la description qui va suivre de deux modes de réalisation d'un modulateur de freinage conforme à l'invention, donnée uniquement à titre d'exemple et faite en référence aux dessins annexés dans lesquels :

la Figure 1 est une représentation schématique d'un modulateur de freinage selon l'invention ;

la Figure 2 est une vue analogue à la Figure 1 d'un autre modulateur conforme au principe de l'invention.

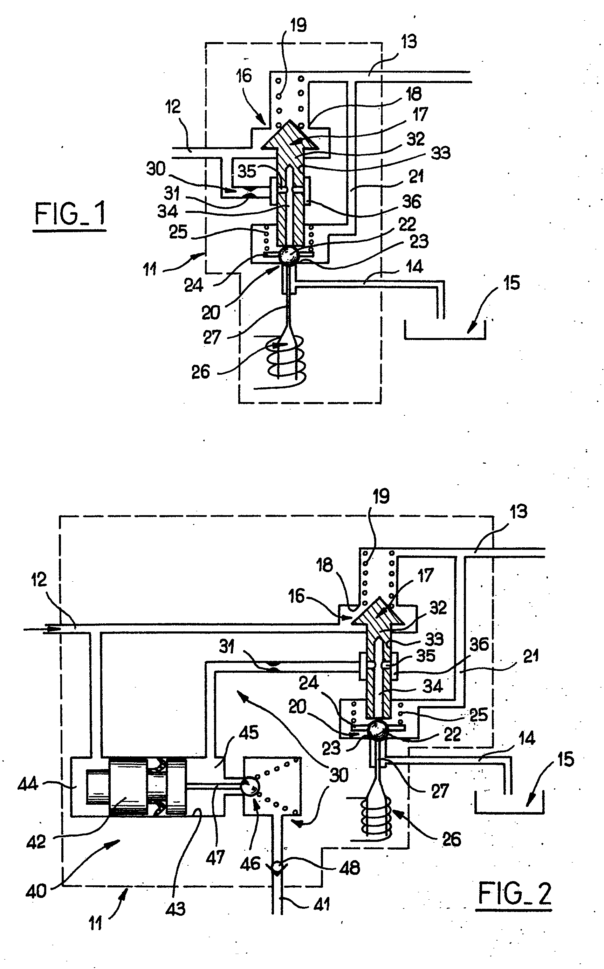

En se référant plus particulièrement à la Figure 1, où l'encadrement 11 englobe les principaux composants du modulateur de freinage en question, on voit que ce modulateur comporte un conduit (12) destiné à être relié à une source de pression de freinage, un conduit de sortie (13) destiné à être relié à au moins un moteur de frein et un conduit de décharge (14) destiné à être relié à une bâche hydraulique (15). Une vanne d'isolement (16) est agencée entre les conduits (12) et (13). Cette vanne d'isolement se compose d'un clapet mobile (17) coopérant avec un siège circulaire (18). En l'absence de tout cycle de freinage anti-patinant, les conduits (12) et (13) communiquent puisque le clapet (17) est sollicité en éloignement de son siège (18) grâce à un ressort (19). D'autre part, une vanne de décharge (20) est agencée entre le conduit de sortie (13) (par l'intermédiaire d'un conduit interne (21)) et le conduit (14). Cette vanne de décharge se compose d'un clapet mobile (22) de forme sphérique, coopérant avec un siège circulaire (23). Une bague d'appui (24) est solidaire du clapet sphérique (22) et un ressort (25) prend appui sur cette bague pour solliciter ledit clapet dans la direction de son siège (23). Un solénoïde de commande (26) comporte un organe d'actionnement (27), sous forme d'une tige, couplé au clapet mobile (22) de la vanne de décharge (20). Plus précisément, les vannes d'isolement et de décharge sont agencées de telle sorte que leurs clapets respectifs (17) et (22) soient mobiles suivant un axe commun confondu avec celui de la tige d'actionnement (27). D'autre part, dans la position de repos du modulateur qui est celle représentée sur la Figure 1, le clapet (22) de la vanne de décharge (20) est en contact avec le clapet (17) de la vanne d'isolement (16) pour pouvoir déplacer celui-ci vers son propre siège, lorsque le solénoïde de commande est actionné, et les portions en contact des clapets (17) et (22) constituent un moyen d'obturation d'un circuit de réalimentation (30), agencé entre le conduit (12) et le conduit (21) et comprenant une restriction d'écoulement (31). Dans l'exemple décrit, le clapet mobile (17) de la vanne d'isolement comporte une partie cylindrique (32) coulissant longitudinalement dans un alésage (33). La partie cylindrique (32) comporte quant à elle un élément de conduit axial (34) du circuit de réalimentation (30). Cet élément de conduit (34) débouche axialement par rapport à la face inférieure du clapet mobile (17), en considérant la Figure 1, et le clapet sphérique (22) prend appui sur la partie cylindrique (17), dans la position de repos du modulateur, pour obturer l'élément de conduit (34). Celui-ci est complété par au moins, un perçage radial (35) débouchant dans une gorge annulaire (36) de l'alésage (33), laquelle communique avec la restriction d'écoulement (31). La largeur de la gorge (36) est suffisante pour que le perçage radial (35) y débouche quelle que soit la position du clapet (17). La section de la partie cylindrique (32) de ce clapet est inférieure à celle du siège (18). Le fonctionnement du modulateur qui vient d'être décrit est le suivant.

En l'absence de freinage ou en freinage normal, les éléments constitutifs du modulateur (11) occupent leurs positions illustrées à la Figure 1. Lorsque le circuit électronique de détection d'un risque de patinage (non représenté) qui pilote le solénoïde (26), entre en action, la tige (27) se déplace suivant l'axe commun des deux clapets (17) et (22), ce qui provoque l'application du clapet (17) contre son siège (18), à l'encontre de la force exercée par le ressort (19). Ceci s'accompagne d'une liaison entre les moteurs de frein et la bâche (15), puisque le clapet (22) est soulevé de son siège (23). A partir de ce moment, le clapet (17) est soumis à une différence de pression tendant à le maintenir en application contre le siège (18) (puisque la section de ce siège (18) est supérieure à la section de la partie cylindrique (32)), l'effort de fermeture dû à la pression étant égal à :

$$(Ps - Pf)(S1 - S2)$$

où

Ps est la pression délivrée par la source de pression de freinage appliquée au conduit (12)
Pf est la pression dans les moteurs de frein
S1 est la section du siège (18)
S2 est la section de la partie cylindrique (32) du clapet (17).

Le clapet (17) reste donc fermé tant que le ressort (19) exerce un effort inférieur à la force de pression définie ci-dessus, c'est-à-dire pratiquement tant que le conducteur du véhicule n'a pas relâché la pédale de freinage. Par conséquent, à partir du premier déclenchement du solénoïde (26), la vanne d'isolement (16) se ferme et reste fermée jusqu'à la fin du cycle de freinage anti-patinant. Tant que le solénoïde (26) est alimenté, les clapets (17) et (22) sont en contact de sorte que l'élément de conduit (34) est obturé. On se trouve donc dans une phase de détente puisque, par ailleurs, le conduit (13) relié aux moteurs de frein est connecté à la bâche (15). La désexcitation du solénoïde (26) entraîne la séparation entre les clapets (17) et (22), ce dernier revenant en appui contre son siège (23) et interrompant ainsi la phase de décharge des moteurs de frein. Une phase de réalimentation commence alors puisque la pression de freinage peut à nouveau être communiquée aux moteurs de freins, par l'intermédiaire du circuit de réalimentation (30), défini ci-dessus, c'est-à-dire notamment à travers la restriction (31). Les phases de détente et de réalimentation se poursuivent ainsi jusqu'à une complète immobilisation du véhicule ou jusqu'à ce que le conducteur relâche la pédale des freins.

En se référant à la Figure 2, où les éléments de structure analogues portent les mêmes références numériques, on voit que ce second mode de réalisation se distingue du précédent par le fait qu'un dispositif de copiage de pression (40), susceptible d'être piloté par la source de pression de freinage connectée au conduit (12) est intercalé dans le circuit de réalimentation (30), ce dispositif de copiage étant prévu pour être relié à une source auxiliaire de pression (non représentée) connectée à un conduit (41). Ce dispositif de copiage comporte un piston (42) mobile dans un alésage (43) et séparant celui-ci en deux chambres, respectivement, une chambre de pilotage (44) connectée au conduit (12) et une chambre de pression (45) insérée dans le circuit de réalimentation en amont de la restriction (31). La chambre de pression (45) communique avec une valve (46) établissant la liaison avec le conduit (41), c'est-à-dire avec la source auxiliaire précitée. Plus précisément, cette valve (46) est actionnée par une tige (47) solidaire du piston (42) et faisant saillie dans la chambre (45).

La pression délivrée par la source de pression de freinage (c'est-à-dire le maître cylindre de l'automobile) est donc appliquée dans la chambre (44) et agit sur le piston (42) qui ouvre la valve (46), ce qui autorise l'introduction de fluide sous pression dans la chambre (45). Cette contre-pression réagit sur le piston (42) ce qui a pour effet de refermer la valve (46). Les pressions dans les chambres (44) et (45) s'équilibrent donc pendant tout le fonctionnement et varient dans le même sens. Par conséquent, le système de freinage anti-patinant peut fonctionner avec du fluide hydraulique provenant de la source auxiliaire (41), la pression de ce fluide étant sensiblement identique à celle qui règne dans le maître cylindre. En revanche, le volume d'huile contenu dans le maître cylindre ne varie pratiquement pas. Un clapet anti-retour (48) est inséré dans le circuit de réalimentation en amont de la valve (46) pour éviter une chute de pression dans les freins, en cas de panne du générateur de pression auxiliaire, provoquée par la communication qui serait instaurée entre les conduits (13) et (41), via la restriction (31). Bien entendu, l'invention n'est pas limitée aux modes de réalisations qui viennent d'être décrits, mais comprend tous les équivalents techniques des moyens mis en jeu si ceux-ci le sont dans le cadre des revendications qui suivent.

**Revendications**

1. Modulateur de freinage pour système de freinage anti-patinant à réalimentation, du type comportant une vanne d'isolement (16) agencée entre un conduit (12) destiné à être relié à une source de pression de freinage et un conduit de sortie (13) destiné à être relié à un moteur de frein, une vanne de décharge (20) agencée entre le conduit de sortie et une bâche (15), un circuit de réalimentation (30) incluant une restriction d'écoulement (31), et un solénoïde de commande (26) muni d'un organe d'actionnement (27), les vannes d'isolement et de décharge (16, 20) ayant leurs clapets respectifs (17, 22) mobiles suivant un axe commun et leurs sièges respectifs (18, 23) en opposition, l'organe d'actionnement (27) du solénoïde étant couplé au clapet mobile (22) de la vanne de décharge (20), lequel est couplable mécaniquement au clapet mobile (17) de la vanne d'isolement (16) par un organe de liaison (32), coulissant dans un alésage (33), pour déplacer ce dernier vers son propre siège (18), à l'encontre d'un moyen de rappel élastique (19), lorsque le solénoïde de commande est actionné, caractérisé en ce que le clapet mobile (17) de la vanne d'isolement comporte une partie cylindrique (32) formant l'organe de liaison et définissant intérieurement une portion de conduit (34) du circuit de réalimentation débouchant latéralement (36) dans l'alésage, cette portion de conduit (32) débouchant dans l'extrémité axiale de la partie cylindrique (32) coopérant avec le clapet mobile (22) de la vanne de décharge (20) et étant obturable par ce dernier, la section (S2) de la partie cylindrique (32) étant inférieure à la section (S1) du siège (18) du clapet mobile (17) de la vanne d'isolement (16).

2. Modulateur selon la revendication 1, caractérisé en ce que le clapet mobile (22) de la vanne de décharge (20) est sollicité élastiquement vers son propre siège (23) par un ressort de rappel associé (25).

3. Modulateur selon la revendication 1 ou la revendication 2, caractérisé en ce que l'élément de conduit (34) de la partie cylindrique (32) comporte au moins un perçage (35) sensiblement radial débouchant dans une gorge annulaire (36) de l'alésage (33), laquelle communique avec la restriction d'écoulement (31).

4. Modulateur selon l'une des revendications précédentes, caractérisé en ce que le clapet mobile (22) de la vanne de décharge (20) a une forme essentiellement sphérique.

5. Modulateur selon l'une des revendications précédentes, caractérisé en ce que la restriction d'écoulement (31) communique avec la source de pression de freinage.

6. Modulateur selon l'une des revendications 1 à 4, caractérisé par un dispositif de copiage de pression (40) susceptible d'être piloté par la source de pression de freinage et intercalé dans le circuit de réalimentation (30), ce dispositif de copiage (40) étant prévu pour être relié (41) à une source auxiliaire de pression.

7. Modulateur selon la revendication 6, caractérisé en ce que le dispositif de copiage (40) comporte un piston (42) mobile dans un alésage (43) et séparant celui-ci en deux chambres, une chambre de pilotage (44) destinée à être reliée à la source de pression de freinage et une chambre de pression (45) insérée dans le circuit de réalimentation (30), en ce que cette chambre de pression (45) communique avec une valve (46) établissant la liaison à la source auxiliaire de pression, et en ce qu'une tige d'actionnement (47) solidaire du piston (42) fait saillie dans ladite chambre de pression (45) pour coopérer avec ladite valve (46).

8. Modulateur selon la revendication 7, caractérisé en ce qu'un clapet anti-retour (48) est inséré dans le circuit de réalimentation (30), de préférence en amont de ladite valve (46).

**Claims**

1. A brake pressure modulator for an anti-skid system, of the type comprising an isolating valve (16) connected between a conduit (12) to be connected to a brake pressure source and an outlet conduit (13) to be connected to a brake motor, a discharge valve (20) connected between the outlet conduit and a reservoir (15), a refilling circuit (30) including a flow restriction (31), and a control solenoid (26) provided with an actuating member (27), the isolating and discharge valves (16, 20) having their respective movable valve members (17, 20) along a common axis and their respective seats (18, 23) opposed to each other, the actuating member (27) of the solenoid being coupled to the movable valve member (22) of the discharge valve (20), which is mechanically connectable to the movable valve member (17) of the isolating valve (16) by a connecting member (32) sliding in a bore (33) for displacing the latter towards its seat (18) opposite to a resilient return means (19) when the control solenoid is actuated, characterized in that the movable valve member (17) of the isolating valve comprises a cylindrical portion (32) forming the connecting member and defining in its interior a conduit portion (34) of the refilling circuit laterally (36) opening into the bore, said conduit portion (32) opening in the axial end of the cylindrical portion (32) cooperating with the movable valve member (22) of the discharge valve (20) and being adapted to be closed by the latter, the cross section (S2) of the cylindrical portion (32) being smaller than the cross section (S1) of the seat (18) of the movable valve member (17) of the isolating valve (16).

2. The modulator of claim 1, characterized in that the movable valve member (22) of the discharge valve (20) is resiliently biased towards its own seat (23) by an associated return spring (25).

3. The modulator of claim 1 or claim 2, characterized in that the conduit portion (34) of the cylindrical portion (32) comprises at least one bore (35) opening substantially radially in an annular groove (36) of the bore (33), which communicates with the flow restriction (31).

4. The modulator of any of the preceding claims, characterized in that the movable valve member (22) of the discharge valve (20) is of a substantially spherical shape.

5. The modulator of any of the preceding claims, characterized in that the flow restriction (31) communicates with the brake pressure source.

6. The modulator according to any of claims 1 to 4, characterized by a pressure reaction device (40) adapted to be piloted by the brake pressure source and interposed in the refilling circuit (30), said pressure reaction device (40) being provided to be connected (41) to an auxiliary pressure source.

7. The modulator of claim 6, characterized in that the pressure reaction device (40) comprises a piston (42) movable in a bore (43) and dividing the latter into a pair of chambers, a pilot chamber (44) to be connected to the brake pressure source and a pressure chamber (45) inserted in the refilling circuit (30), in that said pressure chamber (45) communicates with a valve (46) providing the connection to the auxiliary pressure source, and in that an actuating rod (47) integral with the piston (42) projects into said pressure chamber (45) to cooperate with said valve (46).

8. The modulator according to claim 7, characterized in that a one way valve (48) is inserted in the refilling circuit (30), preferably upstream of said valve (46).

**Ansprüche**

1. Bremsdruckmodulator für ein Blockierschutzsystem, mit einem Sperrventil (16), das zwischen einer mit einer Bremsdruckquelle zu verbindenden Leitung (12) und einer mit einem Bremsmotor zu verbindenden Ausgangsleitung (13) angeordnet ist, einem Ablaßventil (20), das zwischen der Ausgangsleitung und einem Reservoir (15) angeordnet ist, einem Auffüllkreis (30), der eine Drosselstelle (31) umfaßt, und einem Steuermagneten (26), der mit einem Betätigungsglied (27) versehen ist, wobei das Sperrventil (16) und das Ablaßventil (20) mit ihren entsprechenden beweglichen Ventilkörpern (17, 22) auf einer gemeinsamen Achse und mit ihren entsprechenden Ventilsitzen (18, 23) entgegengerichtet zueinander angeordnet sind, wobei das Betätigungsglied (27) des Steuermagneten mit dem beweglichen Ventilkörper (22) des Ablaßventils (20) gekoppelt ist, der mechanisch verbindbar ist mit dem beweglichen Ventilkörper (17) des Sperrventils (16) durch ein in einer Bohrung (33) gleitbares Verbindungsglied (32), um dieses in Richtung auf seinen eigenen Ventilsitz (18) entgegen einer Rückholfeder (19) zu verschieben, wenn der Steuermagnet betätigt wird, dadurch gekennzeichnet, daß der bewegliche Ventilkörper (17) des Sperrventils einen zylindrischen Abschnitt (32) aufweist, der das Verdingungsglied darstellt und innen einen Leitungsabschnitt (34) des Auffüllkreises bildet, der seitlich (36) in der Bohrung mündet, wobei dieser Leitungsabschnitt (32) am axialen Ende des zylindrischen Abschnitts (32) mündet, der mit dem beweglichen Ventilkörper (22) des Ablaßventils (20) zusammenwirkt und durch diesen verschließbar ist, wobei der Querschnitt (S2) des zylindrischen Abschnittes (37) kleiner ist als der Querabschnitt (S1) des Ventilsitzes (18) des beweglichen Ventilkörpers (17) des Sperrventils (16).

2. Modulator nach Anspruch 1, dadurch gekennzeichnet, daß der bewegliche Ventilkörper (22) des Ablaßventils (20) in Richtung auf seinen eigenen Ventilsitz (23) durch eine zugeordnete Rückholfeder (25) elastisch vorgespannt ist.

3. Modulator nach Anspruch 1 oder 2, dadurch gekennzeichnet, daß das Leitungselement (34) des zylindrischen Abschnittes (32) mindestens eine Bohrung (35) aufweist, die im wesentlichen radial in eine Ringnut (36) der Bohrung (33) mündet, die mit der Drosselstelle (31) in Verbindung steht.

4. Modulator nach einem der vorhergehenden Ansprüche, dadurch gekennzeichnet, daß der bewegliche Ventilkörper (22) des Ablaßventils (20) eine im wesentlichen sphärische Form hat.

5. Modulator nach einem der vorhergehenden Ansprüche, dadurch gekennzeichnet, daß die Drosselstelle (31) mit der Bremsdruckquelle verbunden ist.

6. Modulator nach einem der Ansprüche 1 bis 4, gekennzeichnet durch eine Drucksteuervorrichtung (40), die durch die Bremsdruckquelle ansteuerbar und im Auffüllkreis (30) angeordnet ist, wobei die Drucksteuervorrichtung (40) mit einer Hilfsdruckquelle verbindbar (41) ist.

7. Modulator nach Anspruch 6, dadurch gekennzeichnet, daß die Drucksteuervorrichtung (40) einen Kolben (42), der in einer Bohrung (43) beweglich ist und diese in zwei Kammern unterteilt, eine Steuerkammer (44), die mit der Bremsdruckquelle verbindbar ist, und eine Druckkammer (45), die im Auffüllkreis (30) angeordnet ist, aufweist, daß diese Druckkammer (45) mit einem Ventil (46) in Verbindung steht, das die Verbindung mit der Hilfsdruckquelle herstellt, und daß eine mit dem Kolben (42) fest verbundene Betätigungsstange (47) in die Druckkammer (45) vorsteht, um mit dem besagten Ventil (46) zusammenzuwirken.

8. Modulator nach Anspruch 7, dadurch gekennzeichnet, daß ein Rückschlagventil (48) im Auffüllkreis (30), vorzugsweise stromauf des besagten Ventils (46), angeordnet ist.

FIG_1

FIG_2

0 065 451